Europäisches Patentamt

European Patent Office

Office européen des brevets

(19)

(11) Veröffentlichungsnummer : **0 208 065**
**B1**

(12) **EUROPÄISCHE PATENTSCHRIFT**

(45) Veröffentlichungstag der Patentschrift :
09.08.89

(51) Int. Cl.⁴ : **H 02 M   1/08**

(21) Anmeldenummer : 86104681.1

(22) Anmeldetag : 05.04.86

(54) Schaltungsanordnung für die Treiberschaltung von Hochvoltleistungstransistoren.

(30) Priorität : 22.06.85 DE 3522429

(43) Veröffentlichungstag der Anmeldung :
14.01.87 Patentblatt 87/03

(45) Bekanntmachung des Hinweises auf die Patenter-
teilung : 09.08.89 Patentblatt 89/32

(84) Benannte Vertragsstaaten :
CH DE FR GB IT LI NL SE

(56) Entgegenhaltungen :
EP-A- 0 095 579
EP-A- 0 096 174
DE-A- 3 215 009
GB-A- 2 078 040

(73) Patentinhaber : ROBERT BOSCH GMBH
Postfach 50
D-7000 Stuttgart 1 (DE)

(72) Erfinder : Fiebig, Arnim, Ing. grad.
Talstrasse 30
D-7022 Leinfelden/Echterdingen (DE)
Erfinder : Weber, Rupert, Dipl.-Ing. (FH)
Schulstrasse 14
D-8761 Schneeberg (DE)

(74) Vertreter : Uhlig, Helge, Ing.-Grad.
ROBERT BOSCH GMBH Geschäftsbereich Indus-
trieausrüstung Patente und Lizenzen Postfach 11 49
D-6120 Erbach/Odenwald (DE)

## Beschreibung

Die Erfindung betrifft eine Schaltungsanordnung gemäß dem Oberbegriff des Patentanspruches 1.

Derartige Leistungstransistoren können z. B. als Schalttransistoren mit hoher Frequenz direkt am gleichgerichteten Netz mit sehr hohem Wirkungsgrad betrieben werden. Dies gilt jedoch nicht für die Treiberschaltung, die üblicherweise mit Niederspannungstransistoren und integrierten Schaltkreisen aufgebaut ist, die eine weit geringere Spannungsfestigkeit aufweisen, jedoch zur Ansteuerung der Leitungstransistoren galvanisch mit diesen verbunden werden müssen. Damit hierbei ein sicherer Betrieb möglich ist, werden umfangreiche Schutzschaltungen erforderlich, um im Fehlerfall größere Zerstörungen zu vermeiden.

Für einen sicheren Betrieb von Leistungsschalttransistoren sind eine Vielzahl Schaltungsanordnungen und Schutzschaltungen bekannt, die ein fehlerhaftes Schalten oder eine Überlastung der Leistungstransistoren verhindern (z. B. DE-PS 2 538 453 ; DE-OS 3 028 054 ; DE-OS 3 215 009 ; DE-OS 3 131 296 ; EP-A1-0 095 579). Werden mehrere dieser Schaltungen kombiniert, ergeben sich jedoch leicht gegenseitige Beeinflussungen, die Teile der Schutzschaltung wirkungslos machen oder andere Fehler bedingen können.

In der EP-A-0 096 174 wird eine Kombination mehrerer Schutzschaltungen vorgeschlagen, wobei sowohl die Basis-Emitterspannung wie auch die Kollektor-Emitter-Spannung des Leistungsschalttransistors überwacht werden. Beide Spannungen dienen hierbei dazu, den Strom der Leistungstransistoren in einem Überlastbereich über eine Rückkopplungsschaltung zu begrenzen und bei Überschreiten des Überlastbereiches, z. B. bei einem Kurzschluß im Lastkreis, ein vorübergehendes Abschalten zu bewirken. Für größere Schaltleistungen ist eine derartige Strombegrenzung ungeeignet, da diese eine starke Erwärmung der Leistungstransistoren bewirkt, die nicht mehr abgeleitet werden kann. Um eine unzulässige Erwärmung zu vermeiden, müssen die Leistungstransistoren daher beim Einschalten in sehr kurzer Zeit voll in den Sättigungsbereich geschaltet und beim Abschalten unverzögert voll abgeschaltet werden. Im Überlast- oder Kurzschlußfall darf das schnelle Durchschalten nicht begrenzt oder verzögert werden, sondern es wird ein sofortiges Abschalten erforderlich, und es muß ein erneutes Durchschalten verhindert werden, da dies zu einer weiteren Erwärmung der Leistungstransistoren führt. Die in der EP-A-0 096 174 vorgeschlagene Rückkopplungsschaltung hat weiterhin den wesentlichen Nachteil, daß hohe, steile Abschaltimpulse, die über die Freilaufdiode parallel zu den Leistungstransistoren abgebaut werden, in einer Weise auf den Eingang der Treiberstufe gelangen, die ein unbeabsichtigtes Einschalten bewirken oder zumindest begünstigen.

Aufgabe der Erfindung ist es, in der Treiberschaltung eindeutige Schaltbedingungen für die Hochvolt-Leistungstransistoren zu schaffen und kombinierte Fehlerüberwachungen vorzusehen, die sich gegenseitig ergänzen, sich nicht nachteilig beeinflussen und weitgehend störunempfindlich sind. Gelöst wird diese Aufgabe durch eine Schaltungsanordnung mit den in den Ansprüchen gekennzeichneten Merkmalen.

Die Erfindung wird nachstehend an Hand der in der Zeichnung dargestellten Ausführungsbeispiele näher erläutert. Es zeigen

Fig. 1 ein Blockschaltbild der erfindungsgemäßen Schaltung in einem Anwendungsbeispiel

Fig. 2 ein weiteres Anwendungsbeispiel

Fig. 3 ein Beispiel einer erfindungsgemäßen Treiberschaltung

Fig. 4 den Verlauf von Spannungen und Strömen in der Schaltung nach Fig. 3

Fig. 5 den Verlauf von Spannungen gemäß Fig. 4 im Fehlerfall.

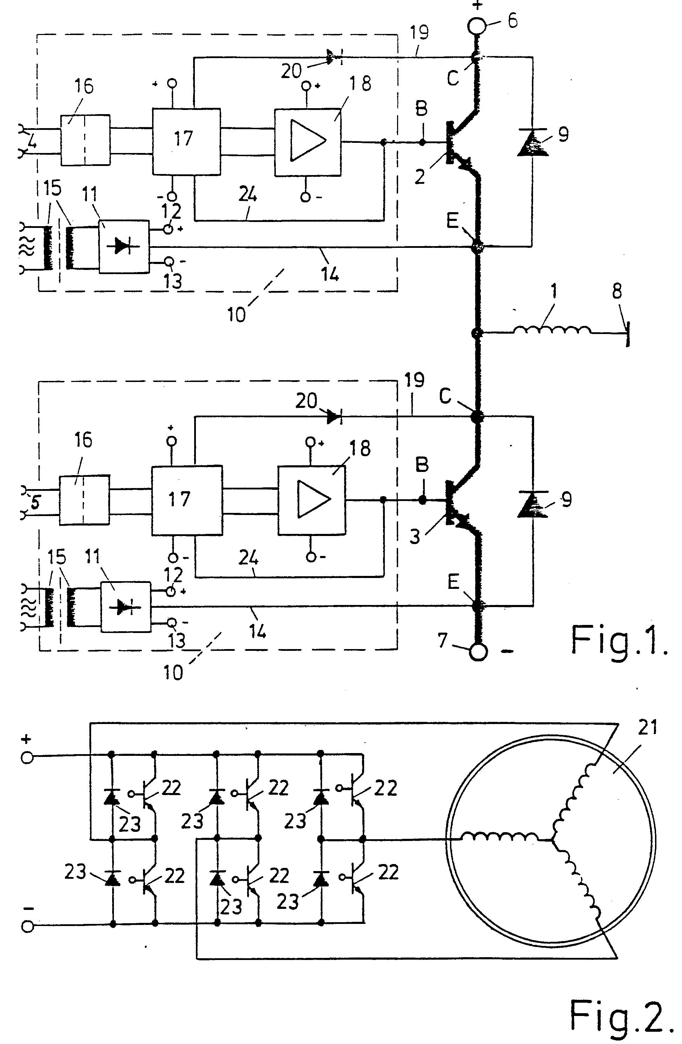

In Fig. 1 wird eine induktive Last 1 über je einen npn-Hochvolt-Leistungstransistor 2 ; 3 entsprechend zweier Eingangssignale 4 ; 5 an den positiven 6 oder negativen Pol 7 einer Gleichspannungsquelle geschaltet. Die Gleichspannungsquelle, die mehrere hundert Volt aufweisen kann, weist einen Nullpunktabgriff 8 auf, der am anderen Ende der Last 1 angeschlossen ist. Parallel zu jedem Leistungstransistor 2 ; 3 liegt eine in bekannter Weise geschaltete Freilaufdiode 9.

Die Steuerung der Hochvolt-Leistungstransistoren 2 ; 3 erfolgt in getrennten Treiberschaltungen 10 die in gleicher Weise aufgebaut sind. Sie haben ein getrenntes Spannungversorgungsteil 11 das eine positive 12 und eine negative Gleichspannung 13 zu einem Bezugsleiter 14 erzeugt. Der Bezugsleiter 14 ist direkt mit dem Emitter E des Hochvolt-Leistungstransistors verbunden, wodurch die Versorgungsspannungen 12 ; 13 und damit auch die einzelnen Stufen der Treiberschaltung 10 einen direkten Bezug zu der jeweiligen Emitterspannung aufweisen. Die Spannungsversorgungteile 11 sind untereinander, galvanisch durch einen Transformator 15 getrennt, der mit einer hochfrequenten Wechselspannung gespeist sein kann, wodurch sich leicht ein kleiner Aufbau und eine hochspannungsfeste Trennung zwischen Primär- und Sekundärwicklung erzielen läßt.

Die Steuersignale 4 ; 5 aus einem nicht dargestellten gemeinsamen Steuerteil, werden über Potential-Trennstufen 16 galvanisch getrennt jeweils einer Ansteuerlogik 17 für die Treiberendstufen 18 zugeführt. Der Ausgang der Treiberendstufen 18 ist direkt mit der Basis B des jeweiligen Hochvolt-Leistungstransistors 2 ; 3 verbunden, und führen diesem — mit Bezugspotential zum Emitter — zum Einschalten eine vorgegebene positive Einschaltspannung und zum Ausschalten eine vorgegebene negative Sperrspannung zu.

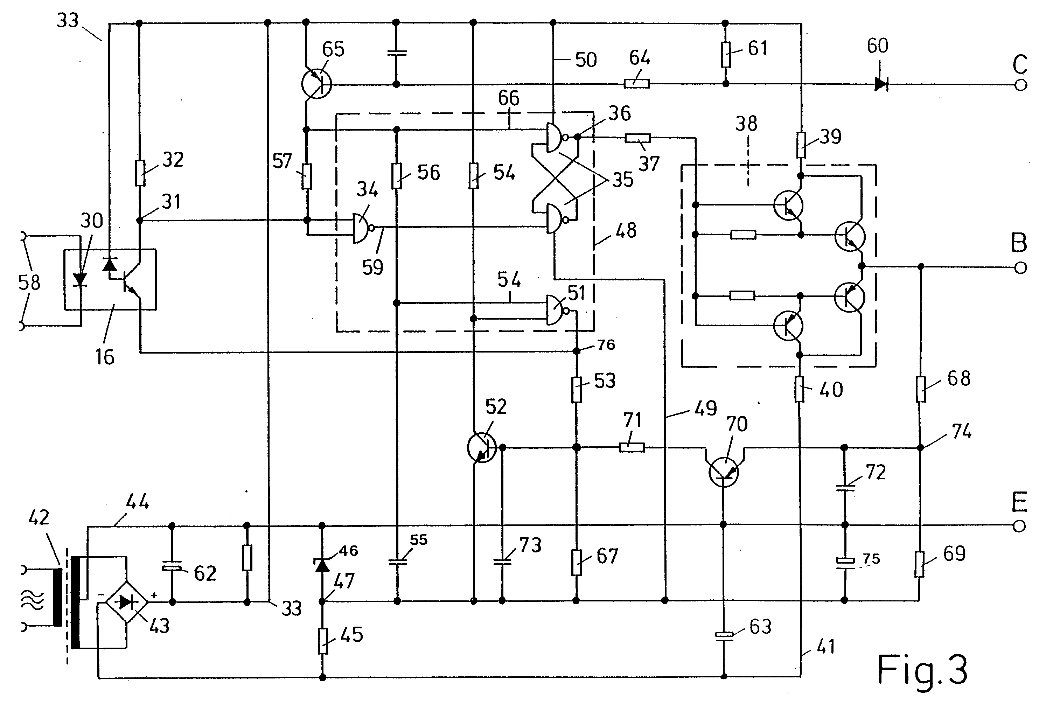

Die für die Erfindung wesentlichen Schutzschaltungen sind in der Ansteuerlogik 17 vorgesehen, wobei über eine Leitungsverbindung 24 zur Basis B und über eine weitere Leitungsverbindung 19 mit einer Diode 20 zum Kollektor C der Hochvolt-Leistungstransistoren 2 ; 3 die dort anliegenden Spannungen überwacht und ausgewertet werden. Eine genauere Erläuterung hierzu erfolgt bei der Beschreibung zu Fig. 3.

Als weiteres Anwendungsbeispiel ist in Fig. 2 die Steuerung eines Servomotors 21 über sechs Hochvolt-Leistungstransistoren 22 dargestellt, denen jeweils eine Freilaufdiode 23 parallel geschaltet ist. Die sechs Leistungstransitoren 22 liegen in drei Brückenzweigen zwischen dem positiven und negativ Pol einer Gleichspannung die durch direkte Netzgleichrichtung gewonnen sein kann. Die Ansteuerung der zwei Leistungstransistoren eines Brückenzweiges können über Schaltungen gemäß Fig. 1 mit erfindungsgemäßen Treiberschaltungen (10) angesteuert werden.

Die Erzeugung der Eingangssignale für die Treiberschaltungen gemäß Fig. 1 und 2 kann in bekannten Steuerteilen erfolgen, wobei nach Art von Schaltreglern z. B. durch eine Pulsbreitenmodulation mit höherfrequenten Impulsen die Größe des Stromes durch die Last 1 oder die Wicklungen des Servomotors 21 und die Stromrichtung durch eine entsprechende Auswahl der zu taktenden Leistungstransistoren erfolgt, wobei immer ein Leistungstransistor eines Brückenzweiges gesperrt bleibt. In diesen Steuerteilen sind üblicherweise Schutzschaltungen vorgesehen, die verhindern, daß Einschaltsignale erzeugt werden, solange der andere Leistungstransistor des gleichen Brückenzweiges durchgeschaltet ist.

In Fig. 3 ist eine der Treiberschaltung 10 gemäß Fig. 1 dargestellt, wobei die Potentialtrennstufe 16 aus einem Optokoppler besteht, an dessen LED 30 die Eingangssignale liegen. Der Kollektorausgang 31 des Optokopplers liegt über einem Arbeitswiderstand 32 an der positiven Treiberversorgung 33 und am Eingang eines Inverters 34, dessen Ausgang an einem Eingang einer bistabilen Kippstufe 35 liegt. Ein Ausgang 36 der Kippstufe 35 liegt über einem Widerstand 37 am Eingang einer aus zwei npn und zwei pnp-Schalttransistoren bestehenden Treiberendstufe 38, die in bekannter Weise aus zwei in Brückenschaltung geschalteten npn- und pnp-Darlingtonschaltungen besteht. Die Brückenschaltung liegt über je einem kleinen Widerstand 39 ; 40 zwischen dem positiven 33 und negativen Pol 41 der Treiberversorgung (42 + 43) und mit ihrem Ausgang an der Basis B des Hochvolt-Leistungstransistors.

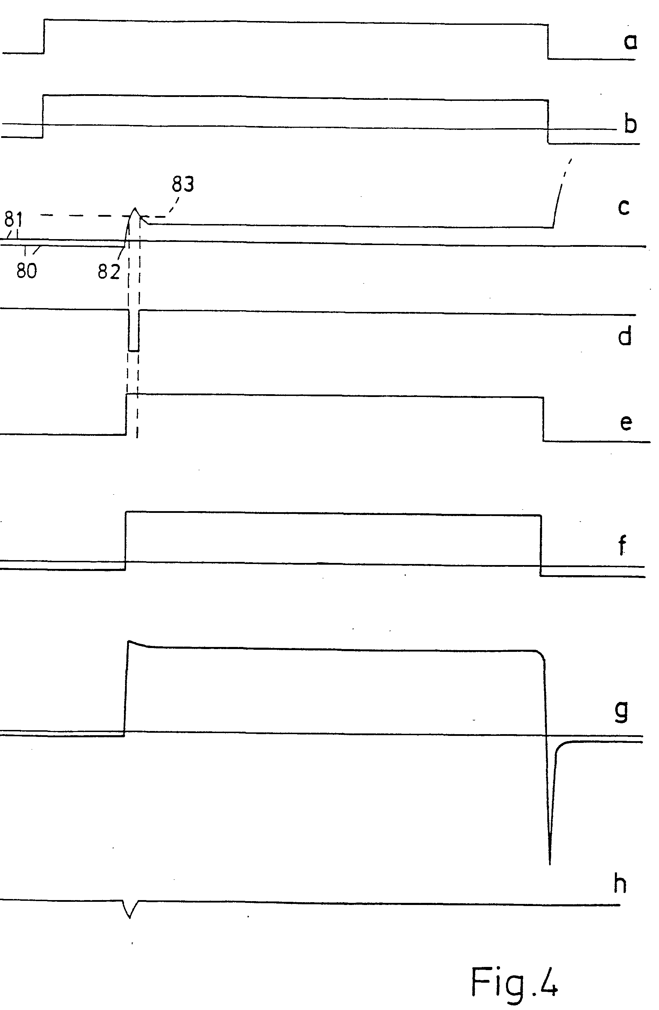

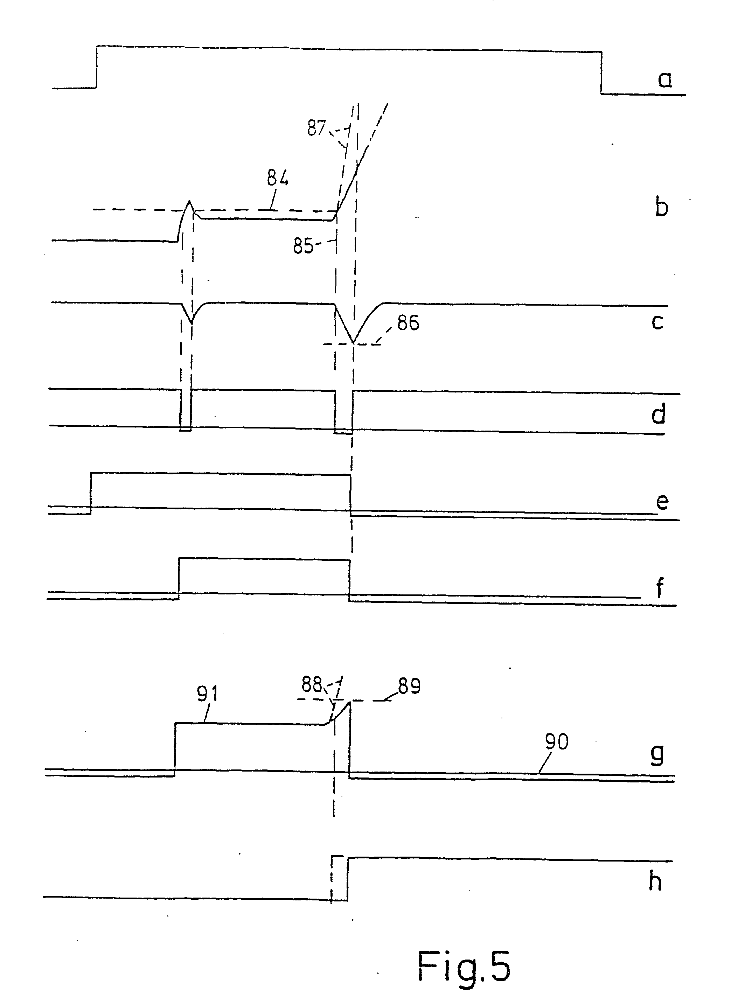

Die Treiberversorgung erfolgt über einen Hochfrequenztransformator 42 mit einer Sekundärwicklung mit Mittelabgriff, die an einem Brückengleichrichter 43 liegt. Vom Mittelabgriff mit dem Bezugspotential Null führt ein Bezugsleiter 44 direkt zum Emitteranschluß E des Hochvolt-Leistungstransistors. Die Ausgangsspannung des Brückengleichrichters 43 wird mit je einem Elektrolytkondensator 62, 63 geglättet und die negative Spannung über die Reihenschaltung eines Widerstandes 45 mit einer Zenerdiode 46 auf einen kleineren Wert stabilisiert. Diese kleinere am Abgriff 47 der Reihenschaltung anliegende stabilisierte und mit einem Elektrolytkondensator 75 geglättete negative Spannung ist einem integrierten Schaltkreis 48 mit vier Nand-Gatter über eine Leitung 49 als negative Versorgungsspannung zugeführt. Seine positive Versorgungsspannung erhält dieser Schaltkreis 48 über die Leitung 50. Diese beiden Versorgungsspannungen bestimmen die jeweilige Ausgangsspannung der vier Nand-Gatter. Drei der Nand-Gatter sind für den Inverter 34 und die Kippstufe 35 verwendet, während das vierte Nand-Gatter 51 Teil einer Kippstufe mit Selbsthaltung ist, die als Fehlerspeicher wirkt. Sie arbeitet hierzu mit einem npn-Transistor 52 zusammen, dessen Kollektor an einem Eingang des Nand-Gatters 51 liegt, dessen Ausgang 76 über einen Widerstand 53 mit der Basis dieses Transistors 52 verbunden ist. Der Emitter des Transistors 52 liegt am Abgriff 47 für die stabilisierte negative Versorgungsspannung und der Kollektor über einen Widerstand 54 an der positiven Treiberversorgung 33. Die Wirkungsweise dieser Schaltung soll in Verbindung mit den Spannungsverläufen von Fig. 4 und 5 erläutert werden. Beim Einschalten der Versorgungsspannung wird die Kippstufe 35 über den Inverter 34 zurückgesetzt, d. h. der Ausgang 36 geht auf Low. Auch der Ausgang des Nand-Gatters 51 wird auf Low gesetzt, sobald ein von dessen freiem Eingang 54 zur stabilisierten negativen Spannung (47) geführter Kondensator 55 über einen Widerstand 56 aufgeladen ist, dessen anderes Ende über einem weiteren Widerstand 57 am Kollektorausgang 31 des Optokopplers und von dort über einen weiteren Widerstand 32 an der positiven Treiberversorgungsspannung 33 liegt.

Wird nun an den Eingang 58 der Potential-Trennstufe 16 ein Eingangssignal gemäß Fig. 4a angelegt, so liegt bei einem Signalwert Null am Kollektorausgang 31 eine positive und am Ausgang 59 des Inverters 34 gemäß Fig. 4b eine negative Spannung an. Auch der Ausgang 36 der Kippstufe 35 bleibt auf dieser negativen Spannung und legt so über die Treiberendstufen 38 die Basis B des Hochvolt-Leistungstransistors auf eine entsprechende negative Sperrspannung. Liegt am Eingang 58 ein Einschaltsignal, wird der Ausgang 59 des Inverters positiv, wodurch der Ausgang 36 der Kippstufe 35 gesetzt werden kann.

Das Setzen der Kippstufe 35 wird jedoch durch eine Sperrschaltung verhindert, wenn über die dem Hochvolt-Leistungstransistor parallel geschaltete Freilaufdiode ein Strom fließt. Ein solcher Freilaufstrom fließt, wenn die Emitterspannung positiver ist als die Kollektorspannung. In diesem Fall fließt über eine kathodenseitig am Kollektoranschluß C liegende Diode 60 ein Strom von der positiven Treiberversorgung 33 über einen Widerstand 61. Dieser Strom wird möglich, da der Bezugsleiter 44 der Treiberversorgung am Emitter liegt und hierbei gemäß Fig. 4c die Kollektorspannung 80 niedriger als die Bezugsspannung 81 ist. Durch den Spannungsabfall am Widerstand 61, der über einen weiteren Widerstand 64 an die Basis eines pnp-Sperrtransistors 65 geführt ist, wird dieser leitend gesteuert und legt die am Emitter anliegende positive Treiberversorgungsspannung weitgehend an den zweiten Eingang 66 der Kippstufe 35 und dem mit diesem Eingang verbundenen Verbindungspunkt der Widerstände 56 und 57. Hierdurch wird der zweite Eingang 66 auf einem so positivem Wert gehalten, daß die Kippstufe 35 mit ihrem Ausgang 36 nicht auf High schalten kann.

Nach Beendigung des Freilaufes zum Zeitpunkt 82 (Fig. 4c) öffnet der Sperrtransistor 65 sobald die Emitterspannung gegenüber der Kollektorspannung des Hochvolt-Leistungstransistors auf einen Wert gefallen ist, der etwa der positiven Treiberversorgungsspannung (33) entspricht. Am Eingang 66 der Kippstufe 35 fällt die Spannung hierbei gemäß Fig. 4d ab und am Ausgang 36 liegt gemäß Fig. 4e eine positive Spannung die den Ausgang der Treiberendstufe auf eine positive Spannung gemäß Fig. 4f setzt. Hierdurch wird der Hochvolt-Leistungstransistor durchgeschaltet und es fließt ein Strom gemäß Fig. 4g.

Durch das Durchschalten des Hochvolt-Leistungstransistors bricht die Spannung zwischen den Anschlüssen C und E auf sehr kleine Werte zusammen, wobei der Spannungsabfall kleiner ist als die Spannung 83 der positiven Stromversorgung 33. Hierdurch fließt über die Diode 60 und den Widerstand 61 wiederum ein Strom der den Sperrtransistor 65 erneut durchschaltet und die Spannung am Eingang 66 der Kippstufe erneut anhebt. Der an diesem Eingang über den Widerstand 56 liegende Kondensator 55 wird hierbei gemäß Fig. 4h kurzfristig nach einer e-Funktion entladen, jedoch sofort nach dem Durchschalten des Hochvolt-Leistungstransistors wieder aufgeladen, so daß seine Spannung zu keiner Zeit auf Werte absinkt, die ein Abfallen des Gatters 51 bewirken könnten.

Wird durch einen Fehler z. B. in der Ansteuerung oder dem Lastkreis der Hochvolt-Leistungstransistor nicht schnell genug oder nicht ausreichend in den Sättigungsbereich geschaltet, wird der Kondensator weiter entladen und hierdurch das Nand-Gatter 51 gesperrt. Der Ausgang 76 dieses Nand-Gatters 51 und der mit ihm verbundene Emitterausgang des Optokopplers wird hierbei auf positives Potential geschaltet, wodurch nicht nur die Potential-Trennstufe 16 gesperrt, sondern auch der Kollektorausgang 31 unverzögert auf positives Potential gelegt wird. Hierdurch geht der Ausgang 59 des Inverters auf negatives Potential und setzt die Kippstufe 35 zurück. Da der Ausgang 76 des Nand-Gatters 51 an einem aus zwei Widerständen 53 und 67 bestehenden Spannungsteiler liegt an dessen Abgriff die Basis des Transistors 52 angeschlossen ist, wird gleichzeitig dieser Transistor durchgeschaltet und legt hierbei den zweiten Eingang des Nand-Gatters 51 auf negatives Potential. Hierdurch bleibt der mit dem Nand-Gatter 51 und dem Transistor 52 gebildete Fehlerspeicher gesetzt, unabhängig davon welches Potential der Kondensator 55 am Eingang 54 des Nand-Gatters 51 einnimmt. Ein Rücksetzen des Fehlerspeichers wird erst durch ein Aus- und Wiedereinschalten der Versorgungsspannung möglich.

Eine derartige Fehlerabschaltung erfolgt auch gemäß Fig. 5 wenn durch einen Kurzschluß oder eine Überlast der Hochvolt-Leistungstransistor zu weit entsättigt. Übersteigt die Emitter-Kollektorspannung dieses Transistors das Sperrpotential 84, fließt kein Strom mehr über die Diode 60, sodaß ab dem Zeitpunkt 85 der Kondensator 55 gemäß Fig. 5c entladen wird und mit Unterschreiten eines Schaltpegels 86 den Fehlerspeicher setzt. Die Entladung erfolgt über die Widerstände 56 und 57 da der Transistor 65 hochohmig geschaltet ist und am Kollektrorausgang 31 negatives Potential gemäß Fig. 5d anliegt. Mit Setzen des Fehlerspeichers wird auch der Ausgang 59 des Inverters 34 gemäß Fig. 5e negativ und der Ausgang 36 des Ansteuerspeichers gemäß Fig. 5f zurückgesetzt.

Im normalen Betriebsfall wird die Spannung am Basisanschluß B weitgehend durch die Ausgangsspannung der Treiberendstufe 38 bestimmt. Erfolgt jedoch eine Entsättigung des Hochvolt-Leistungstransistors, z. B. durch einen Überstrom, so steigt die Basis-Emitterspannung in ähnlicher Weise wie die Emitter-Kollektorspannung wenn auch in etwas geringerem Ausmaß an, wie dies in Fig. 5g dargestellt ist. Ergibt sich z. B. durch einen Kurzschluß, eine sehr schnelle Entsättigung 87 gemäß Fig. 5b, erfolgt ein annähernd gleich schneller Anstieg 88 der Basisspannung. Diese Basisspannung wird nun durch eine Zusatzschaltung dadurch überwacht, daß zwischen Basisanschluß B und dem Abgriff 47 für die stabilisierte negative Treiberversorgungsspannung ein Spannungsteiler aus zwei Widerständen 68, 69 liegt dessen Abgriff mit dem Emitter eines weiteren pnp-Transistors 70 verbunden ist. Die Basis dieses Transistors 70 liegt gleichfalls am Emitteranschluß E und der Kollektor über einen Widerstand an einem weiteren Eingang des Fehlerspeichers und zwar der Basis des Transistors 52.

Steigt nun die Spannung am Basisanschluß B über einen durch den Spannungsteiler 68; 69 vorgegebenen Wert 89 (Fig. 5g) an, werden die beiden Transistoren 70 und 52 durchgeschaltet und so der Fehlerspeicher unverzögert gesetzt, wobei der Ausgang 76 gemäß Fig. 5h ein hohes Potential einnimmt. Kurzfristige unschädliche Störspitzen können durch Siebkondensatoren 72; 73 unwirksam gemacht werden.

Die Schaltung gemäß Fig. 3 schaltet einen Hochvolt-Leistungstransistor durch — über die Kippstufe 35 des Ansteuerspeichers vorgegebene — positive und negative Schaltspannungen ein und aus. Sie schützt den Hochvolt-Leistungstransistor weitgehend vor Überlastungen und bei Fehlern im Ansteuer- oder Lastkreis, wobei auch Fehler in der Treiberversorgungsspannung zu einem Abschalten des Hochvolt-Leistungstransistors führen. So wird bei einer verringerten positiven Treiberversorgung 33 das Sperrpotential 84 herabgesetzt, so daß — bevor der Hochvolt-Leistungstransistor in den Entsättigungsbereich kommt — der Fehlerspeicher anspricht, die Entsättigungsüberwachung und die anderen Schutzschaltungen bis dahin jedoch voll funktionsfähig bleiben.

Geht die stabilisierte negative Treiberversorgungsspannung am Abgriff 47 zurück, so wirkt sich dies in erster Linie über den Fußpunkt des Widerstandes 69 am Abgriff 74 des Spannungsteilers 68 ; 69 aus, über den die Basis-Emitterspannung B zu E abgegriffen wird. Die Spannung am Abgriff 74 wird hierbei positiver, schaltet den pnp-Transistor früher durch und setzt — wie zuvor beschrieben — den Fehlerspeicher schon bei geringeren Überströmen, bzw. bei einem weiteren Spannungsrückgang beim Einschalten oder eingeschaltetem Hochvolt-Leistungstransistor. Gemäß Fig. 5g wirkt sich dies so aus als würde der Nullpegel angehoben bis die Spannung 91 bei durchgeschaltetem Hochvolt-Leistungstransistor den Wert 89 erreicht.

Die Schaltungsanordnung gemäß Fig. 3 ist für einen npn-Hochvolt-Leistungstransistor vorgesehen. Durch entsprechende Änderungen im Schaltungsaufbau, kann eine in gleicher Weise wirkende Schaltung für pnp-Leistungstransistoren Anwendung finden. Je nach Anforderung bzw. Verwendungszweck, kann es von Vorteil sein den Fehlerspeicher, durch ein Signal selbsttätig zurückzusetzen, oder z. B. bei Überströmen das Einschalten des Hochvolt-Leistungstransistors nur kurzzeitig rückgängig zu machen, so daß sich eine Strombegrenzung ergibt.

**Patentansprüche**

1. Schaltungsanordnung für die Treiberschaltung (10) eines Schaltreglers mit Hochvolt-Leistungstransistoren und einer Schutzschaltung gegen Überströme und fehlerhaftes Schalten der Leistungstransistoren, deren Basis während des Einschaltens eine entsprechend gepolte Einschaltspannung und während des Ausschaltens eine vorgegebene, entgegengesetzt gepolte Sperrspannung über Endstufen (18, 38) der Treiberschaltung (10) zugeführt ist und das Bezugspotential für die Treiberschaltung mit dem Emitter (E) des Hochvolt-Leistungstransistors (2, 3) verbunden ist, dadurch gekennzeichnet, daß am Eingang der Endstufen der Treiberschaltung (10) eine bistabile Kippstufe (35) als Ansteuerspeicher liegt, der gesetzt oder zurückgesetzt den Ein- oder Ausschaltzustand des Leistungstransistors (2 ; 3) bestimmt und den Ansteuerspeicher über eine Potentialtrennstufe (16) Eingangsschaltsignale zugeführt sind, eine weitere Kippstufe (51 ; 52) als Fehlerspeicher vorgesehen ist, der bei Überschreiten eines vorgegebenen Spannungspegels der Emitter-Kollektorspannung und/oder der Basis-Emitterspannung des Hochvolt-Leistungstransistors (2 ; 3) gesetzt wird, bei gesetztem Fehlerspeicher der Ansteuerspeicher zurückgesetzt und/oder die Eingangsschaltsignale über die Potentialtrennstufe (16) gesperrt werden,

die als Fehlerspeicher wirkende Kippstufe (51 , 52) selbsthaltend derart ausgebildet ist, daß sie einmal gesetzt, erst nach einem Abschalten der Versorgungsspannung zu desaktivieren ist,

am Kollektor des Hochvolt-Leistungstransistors (2 ; 3) über eine Diode (20 ; 60) eine Sperrstufe (65) liegt, welche ein Setzen des Ansteuerspeichers verhindert, solange ein Strom über die dem Hochvolt-Leistungstransistor parallel geschaltete Freilaufdiode (9) fließt,

und daß die Sperrstufe (65) durch Überwachung der Emitter-Kollektorspannung des Hochvolt-Leistungstransistors (2 ; 3) gesteuert wird und jeweils anspricht, wenn ein Freilaufdiodenstrom fließt oder der Hochvolt-Leistungstransistor (2 ; 3) in die Sättigung gesteuert ist.

2. Schaltungsanordnung nach Anspruch 1, dadurch gekennzeichnet, daß am Eingang (54) des Fehlerspeichers (51 ; 52) eine Zeitschaltung (50 ; 56) vorgesehen ist, die ein Setzen des Fehlerspeichers bewirkt, wenn nach Ablauf einer vorgegebenen Zeit nach Setzen des Ansteuerspeichers (35) der Hochvolt-Leistungstransistor (2 ; 3) seine Sättigungswerte nicht erreicht und/oder über diese Zeit hinaus in einem Entsättigungszustand verbleibt.

3. Schaltungsanordnung nach einem der Ansprüche 1 oder 2, dadurch gekennzeichnet, daß am Ausgang der Sperrstufe (65) ein RC-Glied (50 ; 56) liegt, dessen Kondensator (50) sich bei Desaktivierung der Sperrstufe während des Einschaltvorganges oder einer Entsättigung des Leistungstransistors (2 ; 3) umlädt und die Umladung nach Überschreiten eines Schaltpegels (84) den Fehlerspeicher (51 ; 52) setzt, soweit die Umladung nicht zuvor durch ein Aktivieren der Sperrstufe (65) rückgängig gemacht wird.

4. Schaltungsanordnung nach einem der Ansprüche 1 bis 3, dadurch gekennzeichnet, daß eine Einrichtung vorgesehen ist, welche die Basis-Emitterspannung des Hochvolt-Leistungstransistors (2 ; 3) überwacht, unmittelbar bei Überschreiten einer vorgegebenen Basis-Emitterspannung den Ansteuerspeicher (35) zurücksetzt und/oder den Fehlerspeicher (51 ; 52) setzt.

5. Schaltungsanordnung nach einem der Ansprüche 1 bis 4, dadurch gekennzeichnet, daß die Potentialtrennstufe (16) vor dem Eingang des Ansteuerspeichers (35) ein Optokoppler ist, der seine Versorgungsspannung über einen Ausgang (76) des Fehlerspeichers (51 ; 52) erhält und der Ausgangstransistor des Optokopplers (16) in Basis-Emitter-Schaltung geschaltet ist, der sein Emitterbezugspotential von einem Ausgang (76) des Fehlerspeichers (51 ; 52) erhält.

6. Schaltungsanordnung nach einem der Ansprüche 1 bis 5, dadurch gekennzeichnet, daß bei einem fehlerbedingten Absinken der Treiberversorgungsspannungen (33 ; 47) über die Spannungsüberwachungseinrichtung der Emitter-Kollektorspannung und/oder der Basis-Emitterspannung der Fehlerspeicher (51 ; 52) gesetzt wird.

7. Schaltungsanordnung für die Treiberschaltungen von in Brückenschaltung zusammengeschaltete Hochvolt-Leistungstransistoren (22) nach einem der vorhergehenden Ansprüche, dadurch gekennzeichnet, daß für jeden Hochvolt-Leistungstransistor (2 ; 3) eine von den anderen Treiberschaltungen galvanisch getrennte Treiberschaltung (10) vorgesehen ist und eine hochspannungsfeste Trennung jeweils in der Potential-Trennstufe (16) vor dem Eingang des Ansteuerspeichers und bei der Versorgungsspannungserzeugung für jede Treiberschaltung mittels eines Transformators (15 ; 42) insbesondere Hochfrequenztransformators erfolgt.

## Claims

1. Circuit arrangement for the driver circuit (10) of a switched-mode regulator comprising high-voltage power transistors and a protective circuit against over-currents and faulty switching of the power transistors, the base of which is supplied during the turn-on with an appropriately polarised turn-on voltage and during the turn-off with a predetermined oppositely polarised cut-off voltage via output stages (18, 38) of the driver circuit (10) and the reference potential for the driver circuit is connected to the emitter (E) of the high-voltage power transistor (2, 3), characterised in that

at the input of the output stages of the driver circuit (10), a bistable flipflop stage (35) is located as control store which, set or reset, determines the on or off state of the power transistor (2 ; 3) and the control is supplied with input switching signals via a potential isolating stage (16),

a further flipflop stage (51 ; 52) is provided as fault store which is set when a predetermined voltage level of the emitter-collector voltage and/or of the base-emitter voltage of the high-voltage power transistor (2 ; 3) is exceeded,

when the fault store is set the control store is reset and/or the input switching signals are blocked via the potential isolating stage (16),

the flipflop stage (51 ; 52) acting as fault store is constructed in a self-latching manner in such a manner that, once it is set, it can only be deactivated after the supply voltage is switched off,

at the collector of the high-voltage power transistor (2 ; 3), via a diode (20 ; 60), a blocking stage (65) is connected which prevents the control store from being set as long as a current flows via the freewheeling diode (9) connected in parallel with the high-voltage power transistor,

and that the blocking stage (65) is controlled by monitoring the emitter-collector voltage of the high-voltage power transistor (2 ; 3) and responds in each case when a freewheeling diode current flows or the high-voltage power transistor (2 ; 3) is driven into saturation.

2. Circuit arrangement according to Claim 1, characterised in that at the input (54) of the fault store (51 ; 52), a timing circuit (50 ; 56) is provided which causes the fault store to be set if, after a predetermined time has elapsed after the setting of the control store (35), the high-voltage power transistor (2 ; 3) does not reach its saturation values and/or remains in a desaturation state past this time.

3. Circuit arrangement according to one of Claims 1 or 2, characterised in that at the output of the blocking stage (65), an RC section (50 ; 56) is connected the capacitor (50) of which recharges on deactivation of the blocking stage during the turn-on process or with a desaturation of the power transistor (2 ; 3) and the recharging, after a switching level (84) is exceeded, sets the fault store (51 ; 52) unless the recharging has not first been cancelled by an activation of the blocking stage (65).

4. Circuit arrangement according to one of Claims 1 to 3, characterised in that a device is provided which monitors the base-emitter voltage of the high-voltage power transistor (2 ; 3), resets the control store (35) and/or sets the fault store (51 ; 52) immediately when a predetermined base-emitter voltage is exceeded.

5. Circuit arrangement according to one of Claims 1 to 4, characterised in that the potential isolating stage (16) in front of the input of the control store (35) is an optocoupler which receives its supply voltage via an output (76) of the fault store (51 ; 52) and the output transistor of the optocoupler (16) is connected as an base-emitter circuit which receives its emitter reference potential from an output (76) of the fault store (51 ; 52).

6. Circuit arrangement according to one of Claims 1 to 5, characterised in that, when the driver supply voltages (33 ; 47) drop as a result of a fault, the fault store (51 ; 52) is set via the voltage monitoring device of the emitter-collector voltage and/or of the base-emitter voltage.

7. Circuit arrangement for the driver circuits of high-voltage power transistors (22), which are connected together in a bridge circuit, according to one of the preceding claims, characterised in that for each high-voltage power transistor (2 ; 3), a driver circuit (10) which is electrically isolated from the other driver circuits is provided and a high-voltage-resistant isolation occurs in each case in the potential isolating stage (16) in front of the input of the control store and by means of a transformer (15 ; 42), in particular a high-frequency transformer, in the supply voltage generation for each driver circuit.

## Revendications

1. Dispositif de circuit pour le circuit excitateur (10) d'un régulateur de commutation, avec des transistors de puissance haute tension et avec un circuit de protection contre les surintensités et les commutations défectueuses des transistors de puissance, aux bases desquelles est appliquée, pendant l'enclenchement, par l'intermédiaire d'étages terminaux (18, 38) du circuit excitateur (10), une tension d'enclenchement polarisée de façon appropriée, et pendant le déclenchement une tension de blocage prédéfinie, polarisée en sens inverse, le potentiel de référence pour le circuit excitateur étant relié à l'émetteur (E) du transistor de puissance haute tension (2, 3), disposition de circuit caractérisée en ce que :

à l'entrée des étages terminaux du circuit excitateur (10) est placé un étage basculant bistable (35) jouant le rôle de mémoire de commande, qui, en étant positionné ou remis à l'état initial détermine l'état d'enclenchement ou de déclenchement du transistor de puissance (2 ; 3), des signaux de commutation d'entrée étant appliqués à la mémoire de commande par l'intermédiaire d'un étage de séparation de potentiel (16),

il est prévu un autre étage basculant (51 ; 52) jouant le rôle de mémoire de défauts qui, en cas de dépassement d'un niveau de tension prédéfini de la tension émetteur-collecteur et/ou de la tension base-émetteur du transistor de puissance haute tension (2 ; 3) est positionné,

lorsque la mémoire de défauts est positionnée, la mémoire de commande est remise à l'état initial et/ou les signaux de commutation d'entrée sont bloqués par l'intermédiaire de l'étage de séparation de potentiel (16),

l'étage basculant (51 ; 52) jouant le rôle de mémoire de défauts est à maintien automatique de façon qu'une fois positionné, il ne peut-être désactivé qu'après la coupure de la tension d'alimentation,

au collecteur du transistor de puissance haute tension (2 ; 3) est relié, par l'intermédiaire d'une diode (20 ; 60) un étage de blocage qui empêche un positionnement de la mémoire de commande tant qu'un courant circule par l'intermédiaire de la diode de roue libre (9) branchée en parallèle au transistor de puissance haute tension.

l'étage de blocage (65) est commandé par surveillance de la tension émetteur-collecteur du transistor de puissance haute tension (2 ; 3) et il réagit respectivement lorsqu'un courant de diode de roue libre circule ou bien lorsque le transistor de puissance haute tension (2 ; 3) est commandé à la saturation.

2. Disposition de circuit selon la revendication 1, caractérisée en ce qu'à l'entrée (54) de la mémoire de défauts (51 ; 52) il est prévu un circuit de temporisation (50 ; 56) qui provoque un positionnement de la mémoire de défauts lorsqu'après l'écoulement d'un laps de temps prédéfini, après positionnement de la mémoire de commande (35), le transistor de puissance haute tension (2 ; 3) n'a pas atteint sa valeur de saturation et/ou demeure dans un état de désaturation au-delà de ce laps de temps.

3. Disposition de circuit selon une des revendications 1 ou 2, caractérisée en ce qu'à la sortie de l'étage de blocage (65) est placé un organe RC (55 ; 56) dont le condensateur (55) se charge lors de la désactivation de l'étage de blocage pendant le processus d'enclenchement ou d'une désaturation du transistor de puissance (2 ; 3), et cette charge après dépassement d'un niveau de commutation (84) positionne la mémoire de défauts (51 ; 52) dans la mesure où la charge n'a pas été précédemment annulée par une activation de l'étage de blocage (65).

4. Disposition de circuit selon une des revendications 1 à 3, caractérisée en ce qu'il est prévu un dispositif qui surveille la tension base-émetteur du transistor de puissance haute tension (2 ; 3), et qui, immédiatement lors du dépassement d'une tension base-émetteur prédéfinie, remet à l'état initial la mémoire de commande (35) et/ou positionne la mémoire de défauts (51 ; 52).

5. Disposition de circuit selon une des revendications 1 à 4, caractérisée en ce que l'étage de séparation de potentiel (16) en amont de l'entrée de la mémoire de commande (35) est un opto-coupleur qui reçoit sa tension d'alimentation par l'intermédiaire d'une sortie (76) de la mémoire de défauts (51 , 52) et le transistor de sortie de cet opto-coupleur (16) est branché en montage base-émetteur, et reçoit son potentiel de référence émetteur d'une sortie (76) de la mémoire de défauts (51 ; 52).

6. Disposition de circuit selon une des revendications 1 à 5, caractérisée en ce que, lors d'une baisse, conditionnée par un défaut, des tensions d'alimentation (33 ; 47) du circuit excitateur, la mémoire de défauts (51 ; 52) est positionnée par l'intermédiaire du dispositif de surveillance de la tension émetteur-collecteur et/ou de la tension base-émetteur.

7. Disposition de circuit selon une des précédentes revendications, pour des transistors de puissance haute tension (22) réunis dans un montage en pont, disposition de circuit caractérisée en ce que, pour chaque transistor de puissance haute tension (2 ; 3), il est prévu un circuit excitateur (10) séparé galvaniquement des autres circuits excitateurs, et une séparation à l'épreuve de la haute tension est établie respectivement dans l'étage de séparation de potentiel (16) en amont de l'entrée de la mémoire de commande et lors de la production de la tension d'alimentation pour chaque circuit émetteur, au moyen d'un transformateur (15 ; 42) notamment d'un transformateur haute fréquence.

Fig.1.

Fig.2.

Fig.3

EP 0 208 065 B1

Fig.4

Fig.5